# EUROPEAN PATENT APPLICATION

(11) **EP 2 254 029 A1**
(43) Date of publication of application: **24.11.2010**
(21) Application number: 08874523.7
(22) Date of filing: 30.12.2008
(51) Int. Cl.: G06F 3/041

(54) **HANDWRITING INPUT PROCESSING DEVICE AND METHOD**

(30) Priority: 05.06.2008 CN 200810111265
(71) Applicant: ZTE Corporation, Shenzhen, Guangdong 518057 (CN)
(72) Inventor: ZHANG, Xiaoyong, Guangdong 518057 (CN)
(74) Representative: Hutchinson, Glenn Stanley
(86) International application number: PCT/CN2008/073852
(87) International publication number: WO 2009/146597

(57) **Abstract**

The present invention discloses a handwriting input processing device and method. The method comprises: determining time efficiency and space efficiency for sampling coordinate points on a touch screen according to the prestored configuration parameters; determining a time interval between strokes and a time interval between words of user writing according to the configuration parameters, and sampling and identifying user operations on the touch screen according to the determined time interval between strokes, time interval between words, time efficiency, and space efficiency.

## Description

### TECHNICAL FIELD

The present invention relates to the field of communications, and in particular, relates to a handwriting input processing device and method.

### BACKGROUND

With the development of the mobile communication technology, mobile communication terminals have gradually become a personal information processing platform, wherein one of basic interfaces and methods for human-machine information interaction is a handset input method. However, due to the limitations of hardware size of a handset keypad and physiological size of human finger tips, the input efficiency is rather low, though the keypad input method has been widely applied. At present, in order to solve this problem, a handwriting input method emerges. The handwriting input method is a merged technique based on a touch screen technique, a track identification technology, and a graphics application development technology.

When a user uses the handwriting input method, a certain pressure is imposed on a touch screen via a touch pen. When the user clicks or slides the touch pen, a touch screen driver converts a sampled voltage into a corresponding coordinate point on the screen and adapts it as a pixel point and message which are used by an Input Adaptation Layer (IAL).

The IAL converts the touch message and touch coordinate into a message required by a Graphics Device Interface (GDI) / Graphics User Interface (GUI). If touch calibration is required, then the data is calibrated first before it is sent to the GDI / GUI. The GDI / GUI divides the messages reported from a bottom layer into three operations of the touch pen, i.e., clicking, lifting, and moving, and attaches the corresponding coordinate data to these messages.

With a handwriting input program, the obtained coordinate and message are drawn on the screen, and a complete handwriting is submitted to an input recognition engine for processing. During the processing process, given the hardware processing capability of a mobile terminal per se is certain, the requirement on the execution efficiency of the program is relatively high.

At present, the input efficiency of the handwriting input method may be improved by expanding interface graphic elements. However, when the handwriting input method is used, the recognition rate for cursive scripts is low, the track in handwriting is stiff, and thus user experience is poor. The handwriting feeling during a user's handwriting, though related to the friction coefficient between the handwriting pen and the touch screen, mainly depends on the running efficiency of the whole program.

Besides, in relevant technologies, the study on handwriting input mainly focuses on a coordinate sampling method of a touch screen driver. This method, depending on accurate correspondence relationship between sampled coordinate points and screen coordinates, instead of on global optimization of the handwriting input solution, still has problems of high power consumption of a mobile terminal, low execution efficiency, and poor handwriting feeling during handwriting.

### SUMMARY

The present invention is to address the problems of stiff user handwriting feeling and low input efficiency existing in relevant technologies during handwriting input with a mobile terminal. Therefore a main objective of the present invention is to provide an improved handwriting input processing solution to solve at least one of the above problems.

In order to achieve the above objective, according to an aspect of the present invention, there is provided a handwriting input processing device.

A handwriting input processing device according to an embodiment of the present invention comprises: a handwriting feeling adapting module, for receiving configuration parameters from a user and transmitting the configuration parameters to a parameter configuration file storage module; the parameter configuration file storage module, for storing configuration parameters and updating the stored configuration parameters according to the configuration parameters from the handwriting feeling adapting module; a touch screen coordinate point sample parameter control module, for determining time efficiency and space efficiency for sampling coordinate points according to configuration parameters currently stored in the parameter configuration file storage module; a touch screen coordinate point calibration parameter control module, for determining whether it is necessary to perform coordinate point calibration to a touch screen according to configuration parameters currently stored in the parameter configuration file storage module; a handwriting track identification parameter control module, for determining a time interval between strokes and a time interval between words of user writing according to configuration parameters currently stored in the parameter configuration file storage module, and identifying user input.

Besides, the above device may further comprise: a touch screen coordinate point sample module, for sampling operations of the user on the touch screen according to the time efficiency and the space efficiency determined by the touch screen coordinate point sample parameter control module, and reporting a coordinate point of a user operation.

Additionally, the above device may further comprise: a handwriting track identification module, for receiving the coordinate point reported by the touch screen coordinate point sample module, and identifying the user operation according to the received coordinate point.

Further, the above device may further comprise: a touch screen coordinate point calibration module, for calibrating the touch screen under the control of the touch screen coordinate point calibration parameter control module.

Preferably, the above touch screen coordinate point calibration parameter control module may be configured with a plurality of calibration rules having different running speeds and/or running precisions, and the touch screen coordinate point calibration parameter control module may be further for controlling touch screen calibration performed by the touch screen coordinate point calibration module according to the calibration rules.

Preferably, the above parameter configuration file storage module may include default configuration parameters, in the situation that the handwriting feeling adapting module does not receive parameters inputted by the user, the touch screen coordinate point sample parameter control module, the touch screen coordinate point calibration parameter control module, and the handwriting track identification parameter control module perform their respective processing according to the default configuration parameters.

According to the other aspect of the present invention, there is provided a handwriting input processing method.

A handwriting input processing method according to an embodiment of the present invention comprises: determining time efficiency and space efficiency for sampling coordinate points on a touch screen according to prestored configuration parameters; determining a time interval between strokes and a time interval between words of user writing according to the configuration parameters, and sampling and identifying a user operation on the touch screen according to the determined time interval between strokes, time interval between words, time efficiency, and space efficiency.

Additionally, before the time efficiency and the space efficiency are determined, the method may further comprise: receiving configuration parameters from the user and updating the stored configuration parameters with the received configuration parameters.

Besides, before the sampling and identification are performed, the method may further comprise: determining whether it is necessary to perform coordinate point calibration to the touch screen according to the configuration parameters, and if it is determined as yes, calibrating the touch screen according to a predetermined rule.

Through the above technical solutions of the present invention, a time interval between strokes and a time interval between words of user writing are determined according to configuration parameters, and sampling and identification of user operations on a touch screen are performed according to the determined time interval between strokes, time interval between words, time efficiency, and space efficiency, thereby the present invention is capable of solving problems of stiff user handwriting feeling and low input efficiency existing in the relevant technologies during handwriting input with a mobile terminal, capable of achieving an effect of global optimization of handwriting input, and further capable of adapting for different handwriting feeling demands of different users.

Other features and advantages of the present invention will be described in the following description, and partially become obvious from the description, or become understood through implementing the present invention. The objective and other advantages of the present invention may be achieved and obtained through the structure as particularly set out in the written description, claims and accompanying drawings.

### BRIEF DESCRIPTION OF THE DRAWINGS

The illustrated accompanying drawings provide further understanding to the present invention and constitute a part of the present application. The exemplary embodiments of the present invention and the illustration thereof are for explaining the present invention, instead of constituting an improper limitation to the present invention. Among the drawings,
Fig. 1a shows a block diagram of a handwriting input processing device according to a device embodiment of the present invention;
Fig. 1b shows a preferred block diagram of a handwriting input processing device according to a device embodiment of the present invention;
Fig. 2 shows a schematic diagram of Example 1 according to a device embodiment of the present invention; and
Fig. 3 shows a flow chart of a handwriting input processing method according to a method embodiment of the present invention.

### DETAILED DESCRIPTION

### Functional Overview

In view of the problems of stiff user handwriting feeling and low input efficiency existing in the relevant technologies during handwriting input with a mobile terminal, the embodiments of the present invention provide an improved handwriting input processing solution. Through the embodiments of the present invention, a time interval between strokes and a time interval between words of user writing are determined according to configuration parameters, and sampling and identification of user operations on a touch screen are performed according to the determined time interval between strokes, time interval between words, time efficiency, and space efficiency, thereby the present invention is capable of achieving an effect of global optimization of handwriting input.

The embodiments of the present invention will be described in detail with reference to the accompanying drawings hereinafter. It should be understood that the preferred embodiments as described here are only for describing and explaining the present invention, but not for limiting the present invention. Without conflicts, the embodiments of the present invention and the features in the embodiments may be combined one another.

### Device Embodiment

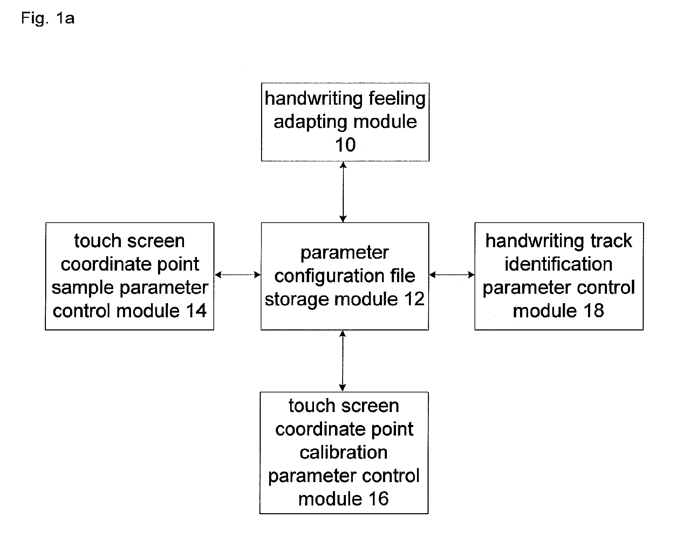

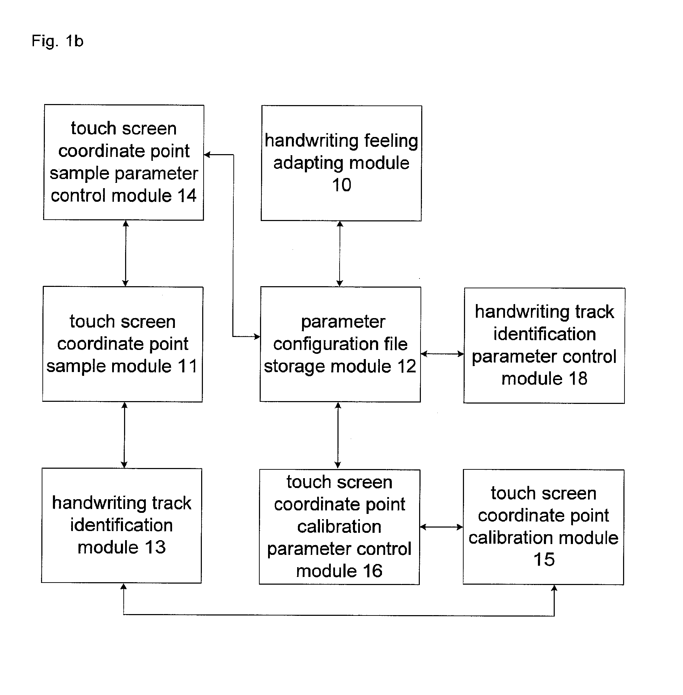

In the present embodiment, there is provided a handwriting input processing device. Fig. 1 shows a block diagram of a handwriting input processing device according to a device embodiment of the present invention.

As shown in Fig. 1, the device comprises: a handwriting feeling adapting module 10, a parameter configuration file storage module 12, a touch screen coordinate point sample parameter control module 14, a touch screen coordinate point calibration parameter control module 16, and a handwriting track identification parameter control module 18. Functions of the above modules will be described in detail hereinafter.

The handwriting feeling adapting module 10 is for receiving configuration parameters from a user, forming a parameter configuration file using the received configuration parameters, and transmitting the parameter configuration file to the parameter configuration file storage module 12 for storage; according to the configuration parameters, handwriting feeling provided to the user may be adjusted so as to satisfy different preferences of different users, for example, the module may record a user recognized soft handwriting feeling as a configuration parameter in the configuration file, which becomes effective instantly.

The parameter configuration file storage module 12, connected to the handwriting feeling adapting module 10, the touch screen coordinate point sample parameter control module 14, the touch screen coordinate point calibration parameter control module 16, and the handwriting track identification parameter control module 18, is for storing configuration parameters (i.e., a parameter configuration file), and updating the stored configuration parameters according to the configuration parameters from the handwriting feeling adapting module 10, and in order to prevent loss of stored parameters when a mobile phone is powered off, or in order to avoid the user's resetting the parameters each time after a mobile phone is powered on, the parameter configuration file may be read by the touch screen coordinate point sample parameter control module 14, the touch screen coordinate point calibration parameter control module 16, and the handwriting track identification parameter control module 18, and meanwhile may be further read and written by the handwriting feeling adapting module 10. Preferably, the parameter configuration file storage module 12 includes default configuration parameters, if the handwriting feeling adapting module 10 does not receive parameters inputted by the user, the touch screen coordinate point sample parameter control module 14, the touch screen coordinate point calibration parameter control module 16, and the handwriting track identification parameter control module 18 perform their respective processing according to the default configuration parameters.

The touch screen coordinate point sample parameter control module 14, connected to the parameter configuration file storage module 12, is for determining time efficiency and space efficiency for sampling coordinate points according to the configuration parameters currently stored in the parameter configuration file storage module 12; wherein on condition that a program control structure is fixed and correct, change of time efficiency is mainly to adjust thread occupation / sleep time, and change of space efficiency is mainly realized by adjusting the buffer area size. And in particular, when the configuration file is abnormal, for example the file is corrupted or parameter values are invalid, the present module can provide correct parameters.

The touch screen coordinate point calibration parameter control module 16, connected to the parameter configuration file storage module 12, is for determining whether to perform coordinate point calibration to the touch screen according to the configuration parameters currently stored in the parameter configuration file storage module 12. When the configuration file is abnormal, for example the file is corrupted or parameter values are invalid, the present module can provide correct parameters.

The handwriting track identification parameter control module 18, connected to the parameter configuration file storage module 12, is for determining a time interval between strokes and a time interval between words of user writing according to the configuration parameters currently stored in the parameter configuration file storage module 12, and identifying user input; the present module may also determine recording frequency of a coordinate point according to other relevant parameters; and when the configuration file is abnormal, for example the file is corrupted or parameter values are invalid, the present module can provide correct parameters.

Besides, Fig. 1b shows a preferred structure of a handwriting input processing device according to a device embodiment of the present invention. As shown in Fig. 1b, the preferred structure of the handwriting input processing device according to the device embodiment of the present invention comprises: a touch screen coordinate point sample module 11, a handwriting track identification module 13, and a touch screen coordinate point calibration module 15. The functions of these modules will be described hereinafter.

The touch screen coordinate point sample module 11, preferably connected to the touch screen coordinate point sample parameter control module 14, is for sampling user operations on the touch screen according to the time efficiency and the space efficiency determined by the touch screen coordinate point sample parameter control module 14, and reporting a coordinate point of a user operation. The present module creates necessary threads and registers corresponding interruption. When there is physically user clicking on the touch screen, touch interruption will be generated; when the touch interruption occurs, it will carry a sampled voltage. The present module converts the voltage generated by touch into a screen coordinate, and stores the coordinate value into a memory space designated by an IAL which accesses this memory space to obtain data.

If a system uses a touch screen coordinate point calibration module 15, then there are other parameters determining whether the internal flow of the touch screen coordinate point calibration module 11 uses a high-speed branch or a normal branch; codes of the high-speed branch, through optimization, have a high running speed but poor calibration precision; codes of the normal branch, which are not optimized, have a relatively slow running speed but high precision.

The handwriting track identification module 13, preferably connected to the touch screen coordinate point sample module 11, is for receiving the coordinate point reported by the touch screen coordinate point sample module 11, and identifying a user operation according to the received coordinate point. The handwriting track identification module 13 records in a memory a series of coordinate points reported from a bottom layer, and passes these coordinate points to an identifying engine for processing. The identifying engine, after processing, returns the identifying results, i.e., internal codes of Chinese characters and English letters, etc. The handwriting track identification module 13, as required by a calling program, converts the codes into GB2312 codes or other codes, and returns them to the calling program.

The touch screen coordinate point calibration module 15, preferably connected to the touch screen coordinate point calibration parameter control module 16 and the touch screen coordinate point sample module 11, is for calibrating the touch screen under the control of the touch screen coordinate point calibration parameter control module 16. The touch screen coordinate point calibration module 15 is located on the IAL, functioning to calibrate the coordinate point reported by the touch screen coordinate point sample module 11 when the locations of a touch screen device and an LCD device are physically translated or deflected during the film adhesion process, or when the touch screen device is aging. Preferably, the above touch screen coordinate point calibration parameter control module 16 is configured with a plurality of calibration rules having different running speeds and/or running precisions, and the touch screen coordinate point calibration parameter control module 16 is further for controlling touch screen calibration performed by the touch screen coordinate point calibration module 15 according to the calibration rules.

The device provided in the present embodiment, by setting the handwriting feeling adapting module, parameter configuration file storage module, touch screen coordinate point sample parameter control module, touch screen coordinate point calibration parameter control module, and handwriting track identification parameter control module, can determine a time interval between strokes and a time interval between words of user writing according to the configuration parameters, and sample and identify user operations on the touch screen according to the determined time interval between strokes, time interval between words, time efficiency and space efficiency, thereby is capable of achieving an effect of global optimization of handwriting input.

According to the above description, the procedure of using the above device is further explained in detail hereinafter.

Step 1, a user determines whether a handwriting feeling satisfies his/her own habitual feeling by testing handwriting; if not, then the process proceeds to Step 2; otherwise, the process proceeds to Step 3;

Step 2, the user calls the handwriting feeling adapting module 10 and selects whether the handwriting feeling is somewhat stiff or somewhat soft according to prompts on a mobile terminal interface; the handwriting feeling adapting module 10 generates a series of configuration data to be stored in the parameter configuration file storage module 12; then the process turns to Step 1;

Step 3, the user starts handwriting;

Step 4, a touch voltage is generated;

Step 5, the touch screen coordinate point sample module 11 calls an interface provided by the touch screen coordinate point sample parameter control module 14;

Step 6, the touch screen coordinate point sample parameter control module 14 reads the configuration file from the parameter configuration file storage module 12 and returns valid parameter values to the touch screen coordinate point sample module 11;

Step 7, the touch screen coordinate point sample module 11, according to the parameters, determines the time efficiency and the space efficiency for running the present module through adjusting thread occupation / sleep time and buffer area size;

Step 8, the touch screen coordinate point sample module 11 stores in the buffer area a screen coordinate point obtained through voltage conversion, and controls the time length of its own thread sleep parameter;

Step 9, the touch screen coordinate point calibration module 15 is accessed after the IAL receives data transmitted from the touch screen coordinate point sample module 11;

Step 10, the touch screen coordinate point calibration module 15 calls an interface provided by the touch screen coordinate point calibration parameter control module 16;

Step 11, the touch screen coordinate point calibration parameter control module 16 reads the configuration file and returns valid parameter values to the touch screen coordinate point calibration module 15;

Step 12, the touch screen coordinate point calibration module 15, according to the parameters, determines whether to perform calibration, and if calibration is to be performed, then the process proceeds to Step 13; otherwise, the data that is not calibrated is transmitted to the handwriting track identification module 13, and the process proceeds to Step 14;

Step 13, the touch screen coordinate point calibration module 15, according to the parameters, performs a high-speed branch or a normal branch, and transmits the calibrated data to the handwriting track identification module 13;

Step 14, the handwriting track identification module 13 calls an interface provided by the handwriting track identification parameter control module 18;

Step 15, the handwriting track identification parameter control module 18 reads the configuration file and returns valid parameters to the handwriting track identification module 13;

Step 16, the handwriting track identification module 13, according to the parameters, sets a stroke time interval timer, a word interval timer, and coordinate point recording frequency;

Step 17, the handwriting track identification module 13 records a complete track of a word;

Step 18, the handwriting track identification module 13 performs identification according to the track and returns internal codes of a Chinese character, an English letter, and etc., to the calling program of the handwriting input method.

Examples for specific implementation of the above handwriting input processing device according to the device embodiment of the present invention will be described with reference to the drawings hereinafter.

### Example 1

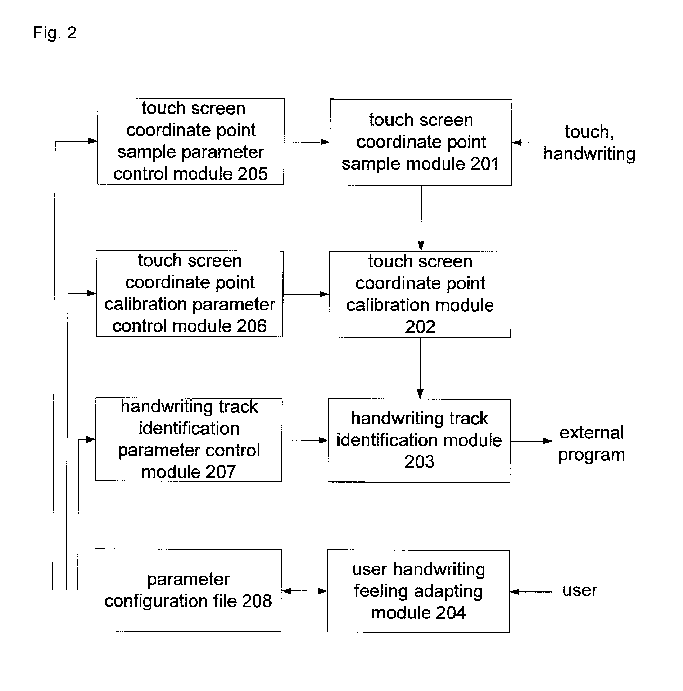

Fig. 2 shows a schematic diagram of structural Example 1 of the handwriting input processing device according to the device embodiment of the present invention. As shown in Fig. 2, the device comprises: a touch screen coordinate point sample module 201, a touch screen coordinate point calibration module 202, a handwriting track identification module 203, a user handwriting feeling adapting module 204, a touch screen coordinate point sample parameter control module 205, a touch screen coordinate point calibration parameter control module 206, a handwriting track identification parameter control module 207, and a parameter configuration file 208.

The touch screen coordinate point sample module 201, connected to two modules, i.e., the touch screen coordinate point sample parameter control module 205 and the touch screen coordinate point calibration module 202, is for responding to external input. When there is physically clicking or sliding on the touch screen, the module will be activated, and the module will call an interface provided by the touch screen coordinate point sample parameter control module 205, and adjusts its own thread occupation / sleep time and buffer area size according to the parameters returned from the interface. The touch screen coordinate point sample module 201 converts a sampled voltage into a screen coordinate and stores the screen coordinate value into the buffer area to be processed by the touch screen coordinate point calibration module 202.

The touch screen coordinate point calibration module 202 is connected to two modules, i.e., the touch screen coordinate point calibration parameter control module 206 and the handwriting track identification module 203. When the touch screen coordinate point sample module 201 stores data into the buffer area, the touch screen coordinate point calibration module 202 starts to be executed. The execution path of the touch screen coordinate point calibration module 202 is also under the control of parameters. The parameters come from return values from the touch screen coordinate point calibration parameter control module 206. These return values, i.e., control parameters, determine whether the touch screen coordinate point calibration module 202 is executed or along which path it is executed. Finally, the data transmitted from the touch screen coordinate point sample module 201, after being processed through the touch screen coordinate point calibration module 202, is transmitted to the handwriting track identification module 203.

The handwriting track identification module 203 is connected to two modules, i.e., the handwriting track identification parameter control module 207 and the touch screen coordinate point calibration module 202, and sends the processing result to an external program. The handwriting track identification module 203 will call an interface provided by the handwriting track identification parameter control module 207 and determine a time interval between strokes, a time interval between words and coordinate point recording frequency under the control of the parameters returned from the interface. The handwriting track identification module 203 sends internal codes of characters obtained through identification to the external program.

The user handwriting feeling adapting module 204 is called for execution by the user and converts a user recognized handwriting feeling into a series of parameters required by the touch screen coordinate point sample parameter control module 205, the touch screen coordinate point calibration parameter control module 206, and the handwriting track identification parameter control module 207, and stores the parameters in the parameter configuration file 208.

The touch screen coordinate point sample parameter control module 205, preferably connected to the parameter configuration file 208, transmits relevant data in the parameter configuration file 208 to the touch screen coordinate point sample module 201. Meanwhile, this module implements transmission of correct data to the touch screen coordinate point sample module 201 when the parameter configuration file 208 is abnormally corrupted or relevant data in the parameter configuration file 208 is invalid, so as to implement effective control of the touch screen coordinate point sample module 201.

The touch screen coordinate point calibration parameter control module 206, preferably connected to the parameter configuration file 208, is for reading the parameter configuration file 208 and transmitting relevant data in the parameter configuration file 208 to the touch screen coordinate point calibration module 202. Meanwhile, this module implements transmission of correct data to the touch screen coordinate point calibration module 202 when the parameter configuration file 208 is abnormally corrupted or relevant data in the parameter configuration file 208 is invalid, so as to implement effective control of the touch screen coordinate point calibration module 202.

The handwriting track identification parameter control module 207, preferably connected to the parameter configuration file 208, is for reading the parameter configuration file 208 and transmitting relevant data in the parameter configuration file 208 to the handwriting track identification module 203. Meanwhile, this module implements transmission of correct data to the handwriting track identification module 203 when the parameter configuration file 208 is abnormally corrupted or relevant data in the parameter configuration file 208 is invalid, so as to implement effective control of the handwriting track identification module 203.

Through the device as shown in Fig. 2, global optimization of user handwriting input is achievable.

### Method Embodiment

In the present embodiment, there is provided a handwriting input processing method, and preferably, the handwriting input processing method as provided in the present embodiment may be implemented with the handwriting input processing device as provided in the device embodiment.

It should be noted that the steps as shown in the flow chart in the drawing may be implemented for example in a computer system having a set of computer-executable instructions, and moreover, though logical sequences are shown in the flow chart, the illustrated or described steps may be implemented in a different sequence under certain circumstances.

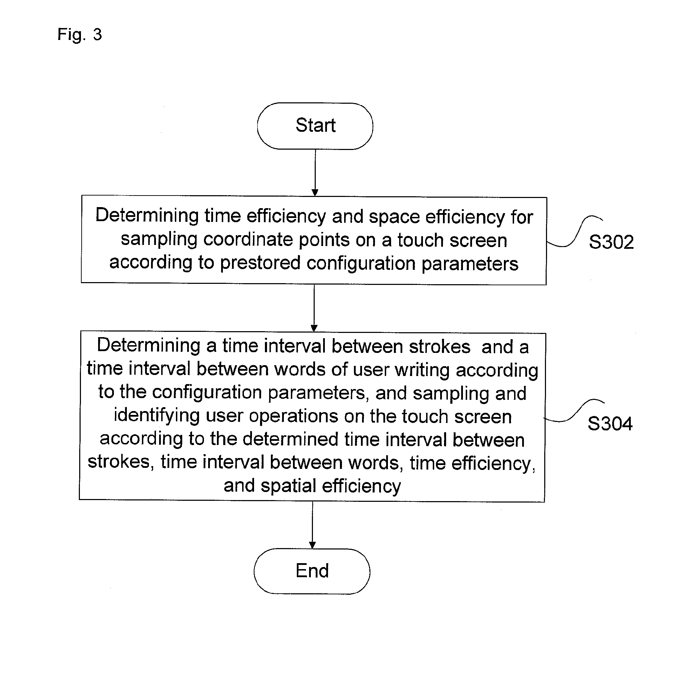

Fig. 3 shows a flow chart of a handwriting input processing method according to a method embodiment of the present invention. As shown in Fig. 3, the handwriting input processing method according to the method embodiment of the present invention comprises the following steps (Step S302 to Step S304).

Step S302, time efficiency and space efficiency for sampling coordinate points on a touch screen are determined according to prestored configuration parameters; preferably, configuration parameters from a user may be received firstly and the stored configuration parameters are updated with the received configuration parameters, and then, the above operation is performed according to the updated configuration parameters. This preferred operation may be implemented by the handwriting feeling adapting module 10 and the parameter configuration file storage module 12 as shown in Fig. 1 a.

Preferably, Step S302 may be implemented by the touch screen coordinate point sample parameter control module 14 as shown in Fig. 1 a.

Step S303, whether it is necessary to perform coordinate point calibration to the touch screen is determined according to the configuration parameters, and if it is determined as yes, calibrating the touch screen according to a predetermined calibration rule.

Preferably, Step S303 may be implemented by the touch screen coordinate point calibration parameter control module 16 as shown in Fig. 1 a.

Step S304, a time interval between strokes and a time interval between words of user writing are determined according to the configuration parameters, and user operations on the touch screen are sampled and identified according to the determined time interval between strokes, time interval between words, time efficiency, and space efficiency.

Preferably, Step S304 may be implemented by the handwriting track identification parameter control module 18 as shown in Fig. 1 a.

To sum up, by virtue of the above technical solution, a global optimization effect is achieved during handwriting input, and moreover, different handwriting feeling requirements of different users are satisfied. A better handwriting experience is brought and meanwhile overall running time of a mobile terminal is reduced, and multi-task concurrency capability is improved.

The above descriptions are just preferred embodiments of the present invention, which are not for limiting the present invention. To those skilled in the art, the present invention may have various changes and alterations. Any and all modifications, equivalent substitutions, and improvements, etc., within the spirit and principle of the present invention shall be included in the protection scope of the present invention.

## Claims

1. A handwriting input processing device, comprising:
a handwriting feeling adapting module, for receiving and transmitting configuration parameters from a user;
a parameter configuration file storage module, for storing configuration parameters and updating said stored configuration parameters according to the configuration parameters from said handwriting feeling adapting module;
a touch screen coordinate point sample parameter control module, for determining time efficiency and space efficiency for sampling coordinate points according to configuration parameters currently stored in said parameter configuration file storage module;
a touch screen coordinate point calibration parameter control module, for determining whether it is necessary to perform coordinate point calibration to a touch screen according to configuration parameters currently stored in said parameter configuration file storage module; and
a handwriting track identification parameter control module, for determining a time interval between strokes and a time interval between words of user writing according to configuration parameters currently stored in said parameter configuration file storage module, and identifying user input.

2. The device according to claim 1, further comprising:
a touch screen coordinate point sample module, for sampling operations of said user on said touch screen according to said time efficiency and said space efficiency determined by said touch screen coordinate point sample parameter control module so as to obtain a coordinate point of a user operation, and reporting said coordinate point.

3. The device according to claim 2, further comprising:
a handwriting track identification module, for receiving said coordinate point reported by said touch screen coordinate point sample module, and identifying said user operation according to said received coordinate point.

4. The device according to claim 1, further comprising:
a touch screen coordinate point calibration module, for calibrating said touch screen under the control of said touch screen coordinate point calibration parameter control module.

5. The device according to claim 4, wherein said touch screen coordinate point calibration parameter control module is configured with a plurality of calibration rules having different running speeds and/or running precisions, and the touch screen coordinate point calibration parameter control module is further for controlling touch screen calibration performed by said touch screen coordinate point calibration module according to said calibration rules.

6. The device according to claim 1, wherein said parameter configuration file storage module includes default configuration parameters, in the situation that said handwriting feeling adapting module does not receive parameters inputted by said user, said touch screen coordinate point sample parameter control module, said touch screen coordinate point calibration parameter control module, and said handwriting track identification parameter control module perform their respective processing according to said default configuration parameters.

7. A handwriting input processing method, comprising:
determining time efficiency and space efficiency for sampling coordinate points on a touch screen according to prestored configuration parameters; and
determining a time interval between strokes and a time interval between words of user writing according to said configuration parameters, and sampling and identifying user operations on said touch screen according to said determined time interval between strokes, time interval between words, time efficiency, and space efficiency.

8. The method according to claim 7, before said time efficiency and said space efficiency are determined, the method further comprising:
receiving configuration parameters from the user and updating said stored configuration parameters with said received configuration parameters.

9. The method according to claim 7, before the sampling and identification are performed, the method further comprising:
determining whether it is necessary to perform coordinate point calibration to said touch screen according to said configuration parameters, and if it is determined as yes, calibrating said touch screen according to a predetermined calibration rule.
